(19) **Europäisches Patentamt / European Patent Office / Office européen des brevets**

(11) **EP 3 483 823 A1**

(12) # EUROPEAN PATENT APPLICATION
published in accordance with Art. 153(4) EPC

(43) Date of publication:
**15.05.2019 Bulletin 2019/20**

(21) Application number: **17826896.7**

(22) Date of filing: **03.07.2017**

(51) Int Cl.:
***G06Q 30/02*** (2012.01)

(86) International application number:
**PCT/CN2017/091464**

(87) International publication number:
**WO 2018/010559 (18.01.2018 Gazette 2018/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **11.07.2016 CN 201610543528**

(71) Applicant: **Alibaba Group Holding Limited Grand Cayman (KY)**

(72) Inventors:
• **PENG, Jiqun**
  **Hangzhou**
  **Zhejiang 311121 (CN)**
• **HE, Huimei**
  **Hangzhou**
  **Zhejiang 311121 (CN)**

(74) Representative: **Conroy, John**
  **Fish & Richardson P.C.**
  **Highlight Business Towers**
  **Mies-van-der-Rohe-Straße 8**
  **80807 München (DE)**

(54) **OBJECT SELECTION METHOD AND APPARATUS**

(57) The present disclosure provides an object selection method and apparatus. The method includes: adjusting a basic relationship weight between every two objects based on a service influence parameter used to affect target object selection, to obtain a new object relationship weight; determining the transmissibility corresponding to each object in an object group based on each new object relationship weight in the object group; determining the activeness corresponding to each object based on a service activity parameter of each object in a service; determining the influence corresponding to each object based on the activeness and the transmissibility; and selecting an object whose influence is greater than a predetermined threshold as a target object. The present disclosure improves service object selection accuracy.

Adjust a basic relationship weight between every two objects based on a service influence parameter used to affect target object selection, to obtain a new object relationship weight — 101

Determine the transmissibility corresponding to each object in an object group based on each new object relationship weight in the object group — 102

Determine the activeness corresponding to each object based on a service activity parameter of each object in a service — 103

Determine the influence corresponding to each object based on the activeness and the transmissibility — 104

Select an object whose influence is greater than a predetermined threshold as a target object — 105

FIG. 1

EP 3 483 823 A1

Description

TECHNICAL FIELD

The present disclosure relates to the field of Internet technologies, and in particular, to an object selection method and apparatus.

BACKGROUND

With the development of Internet technologies, many services are executed through network. For example, service resources can be allocated to some users through the network, so that these users can bring more service benefits with these resources. The users receiving the resources can be referred to as service objects. Certainly, the service object can be of another type in addition to the users. It is very important to determine how to allocate the service resources to these service objects, so as to maximize benefits. If the selected object is not appropriate, the resources can be wasted.

In the related technology, a resource allocation object selection method can be a PageRank algorithm. In the algorithm, a dependency relationship between objects is considered, and the dependency relationship can be used as a weight to calculate relative importance of each object in an object group. An object of high importance is selected as a resource allocation object. However, in this method, parameters used for calculating the importance are limited, and an obtained importance index cannot accurately reflect the service influence of the object in the group. Consequently, service objects determined by using this method are inaccurate, and benefits cannot increase if resources are allocated to these inaccurate objects.

SUMMARY

The present disclosure provides an object selection method and apparatus, to improve service object selection accuracy.

The present disclosure is implemented by using the following technical solutions.

A first aspect provides an object selection method, and the method includes the following: adjusting a basic relationship weight between every two objects based on a service influence parameter used to affect target object selection, to obtain a new object relationship weight; determining the transmissibility corresponding to each object in an object group based on each new object relationship weight in the object group, where the object group includes a plurality of objects; determining the activeness corresponding to each object based on a service activity parameter of each object in a service, where the activeness is used to indicate a level of participation of the object in the service; determining the influence corresponding to each object based on the activeness and the transmissibility, where the influence is used to indicate a degree of influence of the object on another object; and selecting an object whose influence is greater than a predetermined threshold as a target object.

A second aspect provides an object selection apparatus, and the apparatus includes the following: a weight adjustment module, configured to adjust a basic relationship weight between every two objects based on a service influence parameter used to affect target object selection, to obtain a new object relationship weight; a transmissibility determining module, configured to determine the transmissibility corresponding to each object in an object group based on each new object relationship weight in the object group, where the object group includes a plurality of objects; an activeness determining module, configured to determine the activeness corresponding to each object based on a service activity parameter of each object in a service, where the activeness is used to indicate a level of participation of the object in the service; an influence determining module, configured to determine the influence corresponding to each object based on the activeness and the transmissibility, where the influence is used to indicate a degree of influence of the object on another object; and a selection processing module, configured to select an object whose influence is greater than a predetermined threshold as a target object.

According to the object selection method and apparatus in the implementations of the present disclosure, the basic relationship weight is adjusted based on the service influence parameter, so that the transmissibility can be calculated more accurately, and the influence of the object can be determined more accurately by comprehensively considering the activeness of the object. Therefore, the target object can be selected more accurately based on the influence, to improve service object selection accuracy.

BRIEF DESCRIPTION OF DRAWINGS

FIG. 1 is a schematic flowchart illustrating an object selection method, according to an implementation of the present disclosure;

FIG. 2 is a schematic flowchart illustrating another object selection method, according to an implementation of the present disclosure;

FIG. 3 is a schematic structural diagram illustrating an object selection apparatus, according to an implementation of the present disclosure; and

FIG. 4 is a schematic structural diagram illustrating another object selection apparatus, according to an implementation of the present disclosure.

## DESCRIPTION OF IMPLEMENTATIONS

The implementations of the present application provide a resource allocation object selection method. In the method, a part of objects can be selected from an object group including a plurality of objects, and the part of objects can be referred to as target objects. After service resources (for example, the resources can be service information, a certain merchant performs a promotion event at a predetermined time period, and a discount is offered when meeting a specific amount in the promotion event; or the resources are direct discount vouchers; or the resources are consumption vouchers) are allocated to these target objects, the target objects can perform service promotion processing based on the service resources (for example, a target object can allocate the service resources to other objects by using a certain method), thereby increasing service benefits (for example, more objects participate in the current service activity based on the service resources, thereby increasing the service benefits). Whether the selected target object is appropriate directly related to whether the service benefits increase and whether the allocated service resources are effectively used.

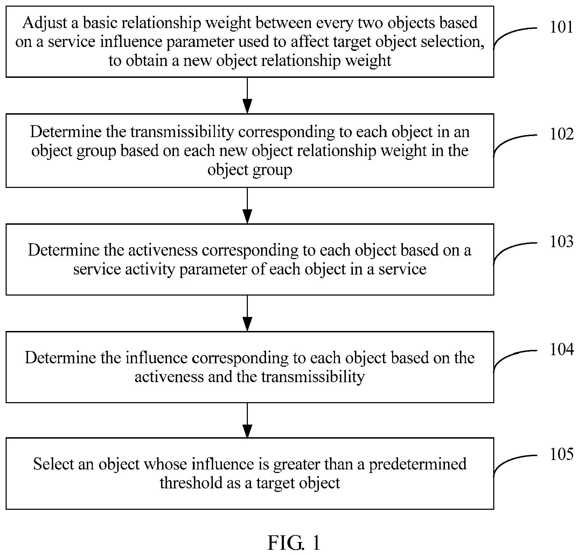

FIG. 1 illustrates an object selection method. The method can include the following steps.

Step 101: Adjust a basic relationship weight between every two objects based on a service influence parameter used to affect target object selection, to obtain a new object relationship weight.

The basic relationship weight between the two objects is a measurement parameter used to indicate interaction and stickiness between the two objects. For example, if the two objects frequently forward blogs of each other, or frequently chat with each other, or mutually perform transfer operations for a plurality of times, it indicates that the two objects are intimate, and the basic relationship weight can be higher. On the contrary, if the two objects rarely communicate with each other, it indicates that the two objects are alienated, and the basic relationship weight can be lower.

In the present step, the basic relationship weight can be adjusted based on the service influence parameter related to a service. The service influence parameter is an important parameter that needs to be considered during target object selection, and lack of the parameter affects target object selection accuracy. However, the parameter is not considered when the basic relationship weight is calculated. Therefore, the basic relationship weight needs to be adjusted based on the service influence parameter to obtain the new object relationship weight. Because the new object relationship weight merges with the service influence parameter, a relationship between the two objects can be reflected more accurately.

Step 102: Determine the transmissibility corresponding to each object in an object group based on each new object relationship weight in the object group.

In the present step, the transmissibility of each object indicates a degree of influence of the object on other object(s). For example, if the transmissibility of a certain object is relatively high, and a service resource is allocated to the object, the object is likely to transmit the service resource to another object and drive the another object to participate in a service activity corresponding to the service resource, thereby obtaining service benefits.

For example, the new object relationship weight between any two objects is calculated in step 101, and the transmissibility corresponding to each object can be determined based on the new object relationship weight by using a weighted PageRank algorithm. The new object relationship weight is a weight used in the weighted PageRank algorithm.

Step 103: Determine the activeness corresponding to each object based on a service activity parameter of each object in a service.

For example, the activeness calculated in the present step is a parameter parallel to the previous transmissibility, and each object has the corresponding transmissibility and activeness. The activeness here can be determined based on the service activity parameter of the object in the service, and the activeness is used to indicate a level of participation of the object in the service. If the object actively participates in the service, the activeness of the object is higher; otherwise, the activeness is lower.

For example, the consumption activeness of a certain object can be calculated based on a quantity of consumption stores, a quantity of consumption days, a quantity of consumption times, etc. of the object in the last three months, and these parameters can indicate whether the consumption of the object is active enough. If the object frequently goes to a plurality of stores for consumption, the consumption activeness of the object is higher. If the object rarely goes out for consumption, the consumption activeness of the object is lower.

Step 104: Determine the influence corresponding to each object based on the activeness and the transmissibility.

For example, the influence calculated in the present step can also indicate the degree of influence of the object on another object. Different from the transmissibility, the influence is determined comprehensively based on the transmissibility and the activeness, so that the influence of the object can be measured more accurately.

Step 105: Select an object whose influence is greater than a predetermined threshold as a target object.

In the present step, the object whose influence is greater than the predetermined threshold can be selected by using a plurality of methods. For example, an influence threshold can be set, and all objects whose influences are greater than the threshold are used as the target objects. Optionally, influences can be sorted, objects corresponding to first N influences are used as the target objects, and N can be set to a natural number, which can be considered as a method for selecting the object whose influence is greater than the predetermined threshold. After the target object is determined, the service resource can be allocated to the object.

According to the object selection method in the present example, the basic relationship weight is adjusted based on the service influence parameter, so that the transmissibility is calculated more accurately, and the influence of the object is determined more accurately by comprehensively considering the activeness of the object. Therefore, the target object is selected more accurately based on the influence. In other words, the selected target object can better transmit service resources, to increase service benefits.

The following uses a marketing scenario in a catering service as an example to describe applications of the object selection method in the implementation of the present application. In the scenario, several concepts are involved and are explained in advance as follows:

Network marketing: a marketing means to promote products for a part of users through the Internet and a social network, so that the part of users consume the products and drive their friends for consumption.

Influence maximization: In a given social network, intimacy between users on the network is known and can be measured by using a relationship weight, and *k* potential users need to be selected, so that the k users affect a maximum quantity of other users. In the present example, the potential user can be referred to as the target object.

O2O: the abbreviation of online to offline, which is an offline business mode, and refers to online marketing and offline consumption driven by online consumption.

PageRank algorithm: PageRank is an algorithm used by Google for web page importance ranking. In the algorithm, a web page is considered as a node, and page to page reference is considered as a directed edge. Basically, assume that one node (web page) is very important because many important nodes point to the node, and recursively defined importance is iteratively calculated by using the algorithm. Initially, assume that importance of nodes is the same and is 1. Then each node equivalently contributes importance to a neighboring node, and adds the importance sent by the neighboring node, to obtain new importance of the node. Iteration occurs until the importance of all nodes does not change. An equation for updating node importance in each round in the PageRank algorithm is as follows:

$$p_i = \alpha + (1 - \alpha) \sum_j w_{ji} p_j^f$$

$p_i$ indicates a PageRank value of node i obtained after a current round of iteration, $p_j^f$ indicates a PageRank value of node *j* obtained after the last round of iteration, $w_{ji}$ indicates a normalized weight of an edge from node *j* to node *i* and is obtained after a weight of the edge from node *j* to node *i* is divided by a sum of weights of all edges using node *j* as a start point, and $\alpha$ is a parameter and is usually 0.15.

Weighted PageRank algorithm: In the algorithm, an edge weight can be calculated by using a certain method. For example, when a node represents a user, a quantity of blogs of one user forwarded by another user is used as the edge weight.

In the marketing scenario in the catering service, assume that *k* users in a given user group need to be selected as potential users, so that the users can affect more users. For example, in a catering store, coupons are intended to be offered to 10 users so that they can go to the restaurant, and then drive more friends to go to the restaurant under the influence of the 10 users. Such scene is a network marketing method in an O2O mode, and the influence can be maximized by selecting a potential user to offer a coupon. Therefore, 10 influential potential users can be selected by using the object selection method in the present example. In the present example, the potential user is referred to as the target object, and a coupon offered to the potential user is referred to as a service resource.

During selection of a potential user, that is, the target object, the influence of the user on the social network needs to be effectively measured. In the previous restaurant coupon provisioning example, accurate determining of the user influence is affected by various factors, for example, a degree of an interaction relationship between users, whether two users frequently forward blogs of each other, or whether two users frequently chat with each other. In addition, a geographical location of the user also affects influence determining a lot. A parameter related to the geographical location is the service influence parameter that can affect target object selection. For example, user A is in Beijing and user B is in Hong Kong. Although user A and user B frequently interact with each other and a relationship weight can be a lot, when user A forwards an advertisement of a certain restaurant in Beijing, B is less likely to go to the restaurant in spite of seeing the advertisement. Therefore, a geographical location is an important service influence parameter in the restaurant coupon provisioning example. Certainly, in another service scenario, a relationship weight between objects can be measured based on a service feature by using another service influence parameter.

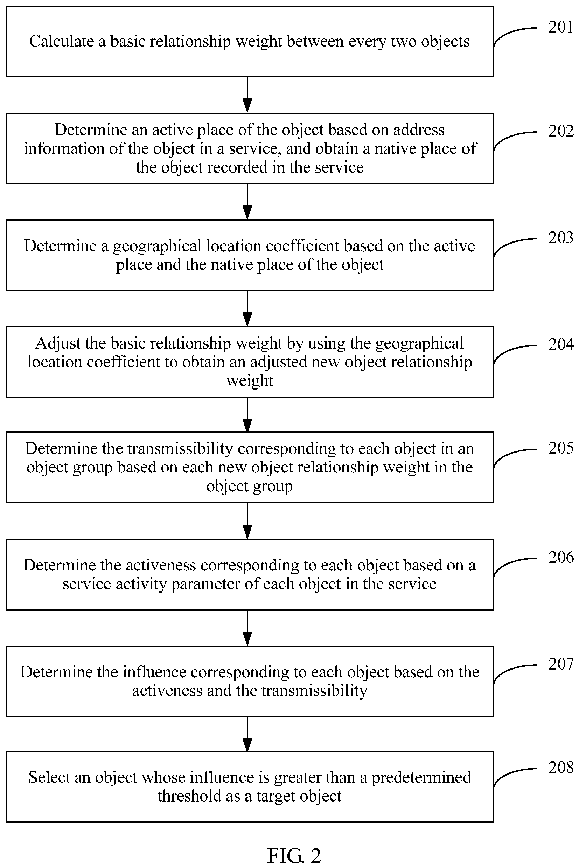

FIG. 2 illustrates a procedure of an object selection method. A target object needed in a restaurant coupon provisioning scenario can be selected by using the method. An execution sequence between steps is not limited in the method. The method can be executed by a certain data processing device. As shown in FIG. 2, the method can include the following steps.

Step 201: Calculate a basic relationship weight between every two objects.

For example, an object group in the present example includes many users. The basic relationship weight between every two objects is calculated. In other words, a weight between any two users is calculated. The basic relationship weight between two users can be used to indicate strength of a relationship between the two users.

Parameters used for calculating the basic relationship weight can include a quantity of chat times, a quantity of times of tapping the Like icon, a quantity of blog forwarding times, a quantity of transfer times, a transfer amount, etc. The data processing device can obtain the previous parameters. For example, the quantity of transfer times and the transfer amount can be obtained by a payment server, and the payment server can store historical data used during a transfer. For another example, the quantity of chat times can be obtained based on data stored by an instant messaging server. The data processing device can combine these parameters to calculate the basic relationship weight between the two users. If the two users are represented as $i$ and $j$, the corresponding basic relationship weight can be represented as $W<i, j>$.

Step 202: Determine an active place of the object based on address information of the object in a service, and obtain a native place of the object recorded in the service.

When using an Internet system, the user leaves a lot of location information, for example, an IP address of a terminal device used for surfing the Internet, and a receipt address written by the user when placing an order. The data processing device can obtain the address information of the user in the service, for example, a city corresponding to the IP address or a city corresponding to the receipt address. The most frequently-used city can be used as the active place of the user. In addition, as some services need the user to enter the native place, the data processing device can further obtain the native place of the user recorded in the service.

Step 203: Determine a geographical location coefficient based on the active place and the native place of the object.

In the present step, a parameter, namely, the geographical location coefficient, can be set, and the coefficient can be used to indicate a geographical location relationship between the two users. The geographical location coefficient can be set based on whether active places and native places of the two objects are the same. For example, if the active places and the native places of the two users are the same, the geographical location coefficient is set to be highest. If at least one of the active places and the native places of the two users is different, the geographical location coefficient is set to be lower. Certainly, the geographical location coefficient can be set by using another method, provided that a relationship between an active place and a native place of an object can be reflected.

For example, in an O2O scenario, the influence of the user is limited by a geographical location. Friends in the same city are easier to be affected. Assume that both an active city and a native city of user A are Hangzhou, and user A has three friends: friend B (active city is Hangzhou), friend C (active city is Beijing but native city is Hangzhou), friend D (both active city and native city are Beijing). After having a meal at a certain restaurant in Hangzhou one day, user A shares the restaurant in a life circle because of the good taste and environment, friend B in Hangzhou is likely to go to the restaurant on the weekend because of sharing by user A, but friend C and friend D in Beijing are less likely to go to the restaurant. As such, user A has a bigger effect on friends in the same city. When friend C is compared with friend D, friend C is more likely to go to the restaurant because the native place of C is Hangzhou. It indicates that friend C is likely to go to Hangzhou on New Year's Day or other festivals and is likely to go to the restaurant because of the recommendation influence of A. Friend D is less likely to go to Hangzhou, but a possibility still exists, for example, business trip or travel to Hangzhou.

In the previous example, the geographical location coefficient can be set based on the geographical location relationship between the two users. For example, assume that the geographical location coefficient is $p$, $p$ between user A and user B is set to 1, $p$ between user A and user C is set to 0.2, and $p$ between user A and user D is set to 0.02. In other words, the geographical location coefficient $p$ in the present example can be in accordance with the following principles:

p = 1.0: Active cities of user $i$ and user $j$ are the same. In other words, $i$ and $j$ are often in the same city.

p = 0.2: Native cities of two users are the same, or an active city of one user is the same as a native city of the other user.
p = 0.02: Native cities and active cities of two users are all different.

Step 204: Adjust the basic relationship weight by using the geographical location coefficient to obtain an adjusted new object relationship weight.

In the present example, based on the basic relationship weight obtained through calculation in step 201, the basic relationship weight between the two objects can be adjusted by using the geographical location coefficient obtained in step 203. For example, assume that an adjusted weight is referred to as the new object relationship weight, and R<$i$, $j$> is used to indicate a new object relationship weight between user $i$ and user $j$. An adjustment method is as follows:

$$R{<}i, j{>} = W{<}i, j{>} \times p$$

In other words, the new object relationship weight can be a product of the basic relationship weight and the geographical location coefficient. However, the present implementation is not limited to the adjustment method, and another adjustment equation used for adjustment based on the geographical location coefficient can also be used. For example, if $p$ is set to 1, the adjusted weight is the same as the basic relationship weight. If $p$ is set to 0.2, the new object relationship weight is decreased to 20% of the basic relationship weight. If $p$ is set to 0.02, the new object relationship weight is decreased to 2% of the basic relationship weight.

Step 205: Determine the transmissibility corresponding to each object in an object group based on each new object relationship weight in the object group.

In the present step, the adjusted new object relationship weight R<$i,j$> can be normalized to build a weighted network. The transmissibility of each user is calculated by using a weighted PageRank algorithm. In other words, by using the new object relationship weight obtained in step 204, the transmissibility can be obtained through calculation based on a node importance update equation mentioned in the algorithm PageRank.

Step 206: Determine the activeness corresponding to each object based on a service activity parameter of each object in the service.

In the present example, a potential user to be selected can be a user active in the O2O field, so that the user is likely to go to a restaurant, thereby affecting the user's friends for same consumption. If the user always has meals at home instead of restaurants, a coupon is hard to impress the user, and it will be hard for the user to recommend his friends to go to the restaurant. Therefore, the activeness of the user needs to be determined in the present step.

For example, the activeness can be calculated by using the following method: A quantity of user offline consumption times, a quantity of merchants, etc. in the last three months can be obtained, and the activeness is calculated based on the following equation:

$$\text{Activeness} = \text{quantity of merchants} \times \text{quantity of consumption days} \times \log (\text{quantity of consumption times})$$

Based on the previous equation, only a user who continually goes to a plurality of stores for consumption for a plurality of times is very active, and the user is more likely to affect other user's consumption.

Step 207: Determine the influence corresponding to each object based on the activeness and the transmissibility.

In the present step, the influence of the object is determined comprehensively based on the activeness and the transmissibility. Only a user with the high activeness and transmissibility is likely to have the high influence. In the present example, it is determined that a weight of the activeness calculated for the influence is lower than a weight of the transmissibility calculated for the influence. A difference between the influences can be reflected by using the following method.

For example, the activeness can be normalized to [1, 50], and the transmissibility can be normalized to [1, 1000]. Then the corresponding influence is calculated by using the following equation:

$$\text{Influence} = \text{transmissibility} \times \text{activeness}$$

In the previous example, the activeness affects the influence less than the transmissibility. For example, an influence difference between user A who goes to a restaurant once per day and a user who goes to a restaurant four times per day is not obvious. However, the transmissibility of a common user who rarely makes comment on a social network can be ignored, and the transmissibility can be far lower than a user having a high transmissibility.

Step 208: Select an object whose influence is greater than a predetermined threshold as a target object.

In the present example, the weighted PageRank algorithm is improved. A weight in the algorithm is adjusted, and a geographical location of the user is considered during relationship weight calculation. In addition, the influence of the user in the O2O field can be measured more effectively based on the activeness of the user. Resources are allocated to a user with the high influence to obtain better service benefits.

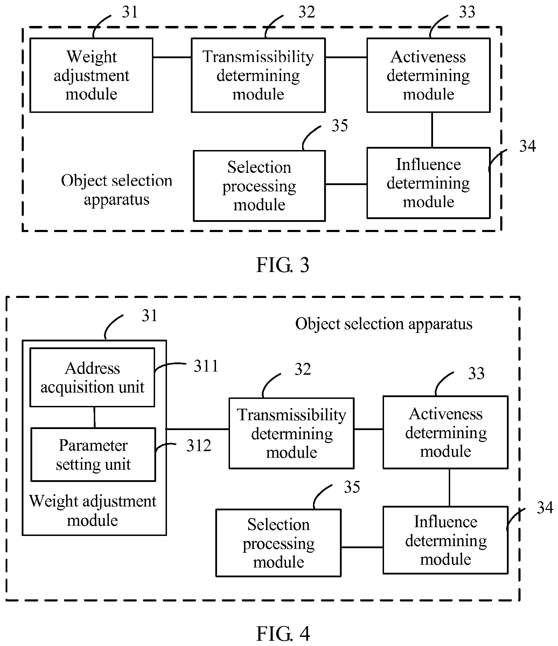

To implement the previous object selection method, an implementation of the present application further provides an object selection apparatus. As shown in FIG. 3, the apparatus can include a weight adjustment module 31, a transmissibility determining module 32, an activeness determining module 33, an influence determining module 34, and a selection processing module 35.

The weight adjustment module 31 is configured to adjust a basic relationship weight between every two objects based on a service influence parameter used to affect target object selection, to obtain a new object relationship weight.

The transmissibility determining module 32 is configured to determine the transmissibility corresponding to each object in an object group based on each new object relationship weight in the object group, where the object group includes a plurality of objects.

The activeness determining module 33 is configured to determine the activeness corresponding to each object based on a service activity parameter of each object in a service, where the activeness is used to indicate a level of participation of the object in the service.

The influence determining module 34 is configured to determine the influence corresponding to each object based on the activeness and the transmissibility, where the influence is used to indicate a degree of influence of the object on another object.

The selection processing module 35 is configured to select an object whose influence is greater than a predetermined threshold as a target object.

In an example, the weight adjustment module 31 is configured to determine a geographical location coefficient based on a geographical location relationship between the two objects, where the geographical location coefficient is used as the service influence parameter; and adjust the basic relationship weight by using the geographical location coefficient to obtain the adjusted new object relationship weight.

In an example, as shown in FIG. 4, the weight adjustment module 31 can include the following: an address acquisition unit 311, configured to determine an active place of the object based on address information of the object in the service, and obtain a native place of the object recorded in the service; and a parameter setting unit 312, configured to set different geographical location coefficients based on whether the two objects have the same active place and native place.

In an example, the influence determining module 34 is configured to determine that a weight of the activeness calculated for the influence is lower than a weight of the transmissibility calculated for the influence.

In an example, the transmissibility corresponding to each object is determined by using a weighted PageRank algorithm.

The previous descriptions are merely preferred implementations of the present disclosure, but are not intended to limit the present disclosure. Any modification, equivalent replacement, or improvement made without departing from the spirit and principle of the present disclosure shall fall within the protection scope of the present disclosure.

## Claims

1. An object selection method, wherein the method comprises the following:

   adjusting a basic relationship weight between every two objects based on a service influence parameter used to affect target object selection, to obtain a new object relationship weight;
   determining the transmissibility corresponding to each object in an object group based on each new object relationship weight in the object group, wherein the object group comprises a plurality of objects;
   determining the activeness corresponding to each object based on a service activity parameter of each object in a service, wherein the activeness is used to indicate a level of participation of the object in the service;
   determining the influence corresponding to each object based on the activeness and the transmissibility, wherein the influence is used to indicate a degree of influence of the object on another object; and
   selecting an object whose influence is greater than a predetermined threshold as a target object.

2. The method according to claim 1, wherein the adjusting a basic relationship weight between every two objects based on a service influence parameter used to affect target object selection, to obtain a new object relationship weight comprises the following:

determining a geographical location coefficient based on a geographical location relationship between the two objects, wherein the geographical location coefficient is used as the service influence parameter; and adjusting the basic relationship weight by using the geographical location coefficient to obtain the adjusted new object relationship weight.

3. The method according to claim 2, wherein the determining a geographical location coefficient based on a geographical location relationship between the two objects comprises the following:

determining an active place of the object based on address information of the object in the service, and obtaining a native place of the object recorded in the service; and setting different geographical location coefficients based on whether the two objects have the same active place and native place.

4. The method according to claim 1, wherein the determining the influence corresponding to each object based on the activeness and the transmissibility comprises the following: determining that a weight of the activeness calculated for the influence is lower than a weight of the transmissibility calculated for the influence.

5. The method according to any one of claims 1 to 4, wherein the transmissibility corresponding to each object is determined by using a weighted PageRank algorithm.

6. An object selection apparatus, wherein the apparatus comprises the following:

a weight adjustment module, configured to adjust a basic relationship weight between every two objects based on a service influence parameter used to affect target object selection, to obtain a new object relationship weight; a transmissibility determining module, configured to determine the transmissibility corresponding to each object in an object group based on each new object relationship weight in the object group, wherein the object group comprises a plurality of objects; an activeness determining module, configured to determine the activeness corresponding to each object based on a service activity parameter of each object in a service, wherein the activeness is used to indicate a level of participation of the object in the service; an influence determining module, configured to determine the influence corresponding to each object based on the activeness and the transmissibility, wherein the influence is used to indicate a degree of influence of the object on another object; and a selection processing module, configured to select an object whose influence is greater than a predetermined threshold as a target object.

7. The apparatus according to claim 6, wherein the weight adjustment module is configured to determine a geographical location coefficient based on a geographical location relationship between the two objects, wherein the geographical location coefficient is used as the service influence parameter; and adjust the basic relationship weight by using the geographical location coefficient to obtain the adjusted new object relationship weight.

8. The apparatus according to claim 7, wherein the weight adjustment module comprises the following:

an address acquisition unit, configured to determine an active place of the object based on address information of the object in the service, and obtain a native place of the object recorded in the service; and a parameter setting unit, configured to set different geographical location coefficients based on whether the two objects have the same active place and native place.

9. The apparatus according to claim 6, wherein the influence determining module is configured to determine that a weight of the activeness calculated for the influence is lower than a weight of the transmissibility calculated for the influence.

10. The apparatus according to any one of claims 6 to 9, wherein the transmissibility corresponding to each object is determined by using a weighted PageRank algorithm.

Adjust a basic relationship weight between every two objects based on a service influence parameter used to affect target object selection, to obtain a new object relationship weight — 101

Determine the transmissibility corresponding to each object in an object group based on each new object relationship weight in the object group — 102

Determine the activeness corresponding to each object based on a service activity parameter of each object in a service — 103

Determine the influence corresponding to each object based on the activeness and the transmissibility — 104

Select an object whose influence is greater than a predetermined threshold as a target object — 105

FIG. 1

Calculate a basic relationship weight between every two objects — 201

Determine an active place of the object based on address information of the object in a service, and obtain a native place of the object recorded in the service — 202

Determine a geographical location coefficient based on the active place and the native place of the object — 203

Adjust the basic relationship weight by using the geographical location coefficient to obtain an adjusted new object relationship weight — 204

Determine the transmissibility corresponding to each object in an object group based on each new object relationship weight in the object group — 205

Determine the activeness corresponding to each object based on a service activity parameter of each object in the service — 206

Determine the influence corresponding to each object based on the activeness and the transmissibility — 207

Select an object whose influence is greater than a predetermined threshold as a target object — 208

FIG. 2

31　　　　　　　　　32　　　　　　　　　33

```
┌─────────────┬──────────────┬──────────────┐
│   Weight    │Transmissibility│  Activeness  │
│ adjustment  │ determining   │ determining  │
│   module    │   module      │   module     │
└─────────────┴──────────────┴──────────────┘
```

35

```
Object selection        Selection        Influence
   apparatus            processing       determining
                          module           module
```

34

**FIG. 3**

```
Object selection apparatus
```

31

```
┌─────────────────┐
│     Address     │  311
│ acquisition unit│
├─────────────────┤
│   Parameter     │  312
│  setting unit   │
└─────────────────┘
 Weight adjustment
      module
```

32　　　　　　　33

```
Transmissibility      Activeness
 determining         determining
   module              module
```

35

```
  Selection          Influence
 processing         determining
   module             module
```

34

**FIG. 4**

## INTERNATIONAL SEARCH REPORT

| International application No. |
| --- |
| **PCT/CN2017/091464** |

**A. CLASSIFICATION OF SUBJECT MATTER**

G06Q 30/02 (2012.01) i

According to International Patent Classification (IPC) or to both national classification and IPC

**B. FIELDS SEARCHED**

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

CNKI, CNPAT, WPI, EPODOC, IEEE: object, business, relationship, weight, transmissibility, influence, liveness, geographic position, native place, birth place, page rank

**C. DOCUMENTS CONSIDERED TO BE RELEVANT**

| Category* | Citation of document, with indication, where appropriate, of the relevant passages | Relevant to claim No. |
| --- | --- | --- |
| X | CN 102663101 A (BEIJING JIAOTONG UNIVERSITY et al.), 12 September 2012 (12.09.2012), description, paragraphs [0004] and [0087]-[0106] | 1-10 |
| PX | CN 106875205 A (ALIBABA GROUP HOLDING LIMITED), 20 June 2017 (20.06.2017), claims 1-10 | 1-10 |
| A | CN 104850647 A (NATIONAL COMPUTER NETWORK AND INFORMATION SECURITY MANAGEMENT CENTER), 19 August 2015 (19.08.2015), the whole document | 1-10 |
| A | CN 105117422 A (COMMUNICATION UNIVERSITY OF CHINA), 02 December 2015 (02.12.2015), the whole document | 1-10 |
| A | US 8862492 B1 (GOOGLE INC.), 14 October 2014 (14.10.2014), the whole document | 1-10 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 20 September 2017 (20.09.2017) | **11 October 2017 (11.10.2017)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **YANG, Dong** Telephone No.: (86-10) **010-62413693** |
| --- | --- |

Form PCT/ISA/210 (second sheet) (July 2009)

## INTERNATIONAL SEARCH REPORT
Information on patent family members

| International application No. |
| --- |
| **PCT/CN2017/091464** |

| Patent Documents referred in the Report | Publication Date | Patent Family | Publication Date |
| --- | --- | --- | --- |
| CN 102663101 A | 12 September 2012 | None | |
| CN 106875205 A | 20 June 2017 | None | |
| CN 104850647 A | 19 August 2015 | None | |
| CN 105117422 A | 02 December 2015 | None | |
| US 8862492 B1 | 14 October 2014 | None | |

Form PCT/ISA/210 (patent family annex) (July 2009)